Europäisches Patentamt

European Patent Office

Office européen des brevets

(11) Publication number: **0 161 411 B1**

## EUROPEAN PATENT SPECIFICATION

(45) Date of publication of patent specification: **23.12.92**   (51) Int. Cl.⁵: **C01B 33/26**

(21) Application number: **85102812.6**

(22) Date of filing: **12.03.85**

(54) **Organophilic clay gellant and process for its production.**

(30) Priority: **22.03.84 GB 8407531**

(43) Date of publication of application:
**21.11.85 Bulletin  85/47**

(45) Publication of the grant of the patent:
**23.12.92 Bulletin  92/52**

(84) Designated Contracting States:
**DE FR GB NL**

(56) References cited:
**DE-A- 2 739 504**
**GB-A- 2 108 175**
**US-A- 4 382 868**

(73) Proprietor: **Laporte Industries Limited**
**3 Bedford Square**
**London WC1B 3RA(GB)**

(72) Inventor: **Yates, Michael Henry**
**28, Mountway**
**Waverton Nr. Chester Cheshire(GB)**
Inventor: **Shaw, David**
**12, Worcester Close**
**Great Sankey Warrington Cheshire(GB)**

(74) Representative: **ffrench-Lynch, Cecil et al**
**Laporte Industries Ltd. Group Patent Department P.O. Box 2 MoorfieldRoad**
**Widnes Cheshire WA8 OJU(GB)**

## Description

This invention relates to the production of organophilic clay gellants suitable for use to thicken organic liquids such as, for example, oil-based drilling minds, or for the production of greases.

The production of organophilic clays by ion exchange of onium compounds onto clays has long been known. The maximum loading of onium compound onto a clay by ion exchange is strictly limited by the ion exchange capacity of the clay and, as a result, organophilic clay derivatives made by this route were relatively limited in performance. For this reason attempts have been made to increase the quantity of onium compounds in organophilic clay gellants to a level above that allowed for by ion exchange.

British Patent No. 1592271 discloses a process for preparing "over-treated" organophilic clay gellants in solid form in which the over-treatment is limited to an excess of from 12% to 25% above the cation exchange capacity of the clay. According to that process, reaction with the clay is conducted in a medium comprising a mixture of water and a polar organic solvent, in a solvent to water ratio of from 1:20 to 2:1, and in a quantity which produces an easily stirrable colloidal suspension from which the organophilic product is recovered by filtration, washing and drying. It is reported that the products so obtained have inherently better gelling properties when the reaction is carried out in the mixture of polar organic solvent and water rather than in water alone.

UK Patent Specification No. 2108175 discloses the production of an organophilic clay gellant by stirring a slurry of the clay, from 90 to 140 milliequivalents of quaternary ammonium compounds by weight of the clay and water for a sufficient time for the quaternary compound to react followed by filtering, washing, drying and grinding the product so obtained.

The present invention provides a process for the production of an organophilic clay gellant containing one or more onium compounds in a quantity in excess of that corresponding to the cation exchange capacity of the clay by treating a swelling clay with the said quantity of an onium compound in the presence of a liquid comprising a polar organic solvent characterised in that any quantity of water which is present is not more than that which would be provided in total by a content of water in the clay of up to 15% by weight and in the onium compound of less than 10% by weight and in the organic solvent of no more than 20% by weight, and in that the quantity of the polar organic solvent is such that a non-flowable paste or a particulate solid mass results from the mixing and in that the paste or solid particulate mass is subjected to sufficient shear mixing to raise the temperature of the non-flowable paste or solid mass, the temperature of mixing being above 50°C but below the boiling point the polar organic solvent.

By non-flowable is meant not flowing under its own weight.

The swelling clays which are used in putting the present invention into practice may be selected from the smectite family of clay minerals. Smectites may be defined as a group of clay minerals or phyllosilicates of the 2:1 layer type with the general formulae:

$$(M^+_{x+y}nH_2O)(R^{3+}_{2-y} R^{2+}_y)(Si_{4-x}Al_x)O_{10}(OH) \text{ (dioctahedral)}$$
$$(M^+_{x+y}nH_2O)(R^{2+}_{3-y} Li_y)(Si_{4-x}Al_x)O_{10}(OH) \text{ (trioctahedral)}$$
$$(M^+_{x+y}nH_2O)(R^{2+}_{3-y} R^{3+}_y)(Si_{4-x}Al_x)O_{10}(OH) \text{ (trioctahedral)}$$

where M represents the exchangeable cations such as $Ca^{++}$, $Mg^{++}$ or $Na^+$ necessary to satisfy the negatively charged lattice. $R^{2+}$ represents magnesium or iron and $R^{3+}$ represents aluminium or iron. This classification is approved by the AIPEA Nomenclature Committee. In the swelling clays these cations usually consist of, or at least comprise in a major proportion, sodium cations possibly in association with minor quantities of other alkali metal or alkaline earth metal cations. Such sodium containing clays are preferred whether as naturally occuring materials such as Wyoming bentonite, or as materials which have been treated by ion exchange to increase their sodium content. Synthetic clays of appropriate structure are not excluded. Preferably the swelling clay is a montmorillonite or a natural or synthetic hectorite. For the avoidance of doubt a swelling clay is one which has the property of swelling in water to give a product having an increased viscosity.

The swelling clays are used according to the present invention in the dry flowable form. This implies the absence of a separate liquid phase. Such clays may contain up to about 15% by weight of adsorbed moisture. as measured by weight loss on drying at 110°C, but more usually from about 3% to 12% by weight of adsorbed moisture although a higher water content than 15% might be tolerated under some circumstances.

Suitably, the swelling clays are used as a milled product having a particle size less than 251 microns, preferably less than 150 microns.

The cation exchange capacity of the swelling clays may fall in the broad range of about 30 m.e. to 100 m.e./100 g clay, but is preferably at least 50, particularly preferably at least 60 m.e./100 g clay (on a dehydrated clay basis-0% adsorbed moisture). Cation exchange capacities are expressed on this same basis hereafter.

The term "onium" is used herein to mean organic ammonium compounds and isologues thereof having the formula $R_nXH_m{}^+B^-$ where R is an organic radical, X is an element, for example nitrogen or phosphorus, which is in its highest possible valency state ($4^+$ for nitrogen and $5^+$ for phosphorus), n is a number at least equal to 1, m is a number at least equal to 1, or 0, and $B^-$ is an anion such as, for example, hydroxyl or chloride. Preferably the value of m is 0 and R is a saturated chain alkyl radical containing from about 10 to 30, particularly preferably 12 to 24 carbon atoms in one or two occurrences and is an alkyl radical containing no more than 5 carbon atoms, suitably a methyl radical, in the remaining occurrences. Preferred onium compounds are ammonium compounds in which R, in one or two occurrences, is based on a hydrogenated tallow oil residue ($C_{18}$) and in two or three occurrences is the methyl radical.

The polar organic solvent preferably has a theoretical boiling point of at least 65°C, particularly preferably at least 75°C for example, most suitably, above 80°C so that it will not tend to boil off at the elevated temperature used in the practice of the invention. Preferably the polar organic solvent is an alcohol having up to about 12 carbon atoms. Particularly preferably the polar organic solvent is isopropanol.

Onium compounds may be available in a small quantity of a polar organic solvent as, for example, a 75% by weight active product. Such materials may be used as such. Some such materials may contain a minor proportion of water. Provided that this content of water is less than 10%, preferably no more than 5%, by weight, it can be tolerated.

The quantity of polar organic solvent is preferably such that the onium compound, when mixed with it, may form a fluid material, for example a solution, which may be mixed with clay.

The quantity of onium compound to be used in excess of the quantity corresponding to the cation exchange capacity of the clay will affect the quantity of polar organic solvent used. It is found that very large excesses of onium compound may be included with the clay according to this invention, for example up to 200% or more, of the quantity corresponding to the cation exchange capacity of the clay. If the cation exchange capcity of the clay is relatively low, for example below about 60 m.e./100 g it may be found that these values may be greatly exceeded. The gelling performance of the material, however, may be at an optimum between 130% and 180% excess. Wtihin the practical guidelines that the mixture of the clay, and onium compound should be a non-flowable paste or a solid particulate mass and that the quantity of the polar organic solvent should be controlled to achieve this, the quantity of polar organic solvent may be, for example, at least about 10% and, for example, less than 30% by weight of the onium compound. Preferably the polar organic solvent, itself, contains substantially no water although the addition of a restricted quantity of water, for example up to 10% by weight, or even up to 20% by weight would not be held to be a departure from the invention. Preferably no non-polar organic solvent is present.

Besides the teaching set out above as to the quantity of water which may be present, which contrasts with previous belief that the presence of a separate water phase is beneficial in the formation of organophlic clay derivatives, the present invention is also characterised by conditions under which the mixture of clay, onium compound and polar organic solvent is processed. According to the invention the mixture is subjected to shear. Shear mixers are known in the art of clay processing and operate on the principle of causing relative movement between the clay particles within the body of the clay mass. Such equipment is contrasted herein with milling equipment, such as a ball mill, which tends to reduce the particle size of the clay by crushing between moving equipment members. Preferably the shear mixer is a Z-blade mixer or a plough shear mixer, e.g. by Lodige Morton. Shear mixing according to the invention is characterised by an increase in temperature in the material being mixed although this increase is generally quite modest, e.g. less than 5°C where fluid slurries are being mixed. The material mixed according to this invention, due to its nature, may experience a somewhat greater increase in temperature. Even this increase is gradual and while it may reach substantial proportions by the end of a normal mixing time of, say, 45 minutes, this may not of itself be sufficient to give the effect of the present invention. The temperature incresae may be an indication of the effect on thge clay structure of milling the clay in dry or paste form. Preferably heat is added to the mix, for example by using a heated mixer, so that the temperature of the mix may be maintained at the required temperature, particularly preferably above 60°C and most preferably above 70°C for the majority of the mixing time and preferably for substantially the whole of, e.g. for at least 80% of the mixing time. Preferably the temperature of the mix is maintained no higher than and particularly preferably below, for example at least 2°C, or from 2°C to 10°C, below the boiling point of the polar organic solvent. By boiling point we mean the actual boiling point bearing in mind that the theoretical boiling point may be elevated by the presence of other materials. The actual boiling point is easily determined.

The conditions of operation of the mixer may suitably be from 30 to 90 revolutions per minute and the normal duration of mixing is preferably at least 30 minutes and may be, for example, up to 2 hours or more although an extension of time may not give any further benefit.

After mixing, the organophilic clay product may be used as such, or may be washed with a solvent for the onium compound if it is desired to reduce the content of residual anion associated with the product and/or may, preferably, be subjected to heat to drive off the polar organic solvent. Preferably the product from which the solvent has been removed is milled to break up any aggregates formed during the drying, for example to less than 76 microns. Preferably the drying temperature is from 95°C to 140°C particularly preferably 100°C to 125°C and the polar organic solvent is one which has a suitable actual boiling point to allow this.

As will be apparent from the following examples, the present invention enables highly effective organophilic clay gellants to be produced. It is thought that the processing technique represented by the invention encourages the partial delamination of the clay structure thereby facilitating the intercalation of a large quantity of excess onium compound between the clay layers.

In the following examples the Fann viscosity of oil thickened by organophilic clay gellants according to the invention, or by other gellants is measured. The test conditions are as follows :-

The following ingredients were mixed for 5 minutes at high speed setting on a Hamilton Beach (Trade Mark) Blender.

```
Aromatic-free oil (Clairsol 350M)    33 parts wt
Industrial methylated spirits         1  "      "
CaCl2 solution (23% wt in H2O)       15  "      "


Clay gellant                          3  "      "
                                     (5.8% concn.)
Clairsol is a Trade Mark.
```

The viscosity of the resulting slurry is measured once after 24 hours, on a Fann viscometer operating at 600 rpm. The readings taken are in Fann 600 units.

The organophilic clay gellants so tested were produced by the following standard procedure according to the invention (Examples 1-5) or the indicated variants on it (Examples 6 to 12) which are not according to the invention.

Dry Wyoming bentonite (sodium montmorillonite) available under the Trade Name Volclay having an adsorbed water content of 10% wt and a cation exchange capacity of 70 m.e./100 g is mixed with 114 me/100 g clay (163% of cation exchange capacity of clay) of organic ammonium compound (dihydrogenated tallow dimethyl ammonium chloride available under the Trade Name Arquad 2HT) as a 75% wt% product in isopropanol in a Z-blade mixer (Winkworth Mixer) at 80°C for 45 minutes. (Arquad 2HT has an approximate water content of 5% by weight). The product is dried at 110°C and milled to minus 76 microns.

The results of the tests were as follows.

| Ex | Procedure | Viscometer Reading 24 hrs |
|---|---|---|
| 1 | Standard | 235 |
| 2 | Standard | 264 |
| 3 | Standard | 240 |
| 4 | Standard | 240 |
| 5 | Standard | 284 |
| 6 | Arquad 75% $H_2O$ solution - no organic solvent | 127 |
| 7 | Arquad added as such no solvent or water | 194 |
| 8 | Volclay dehydrated at 110ºC | 174 |
| 9 | Mixer maintained at 8ºC | 70 |
| 11 | Water added to give 2.5% solids suspension which is mixed in a stirred vessel at 60 rpm, filtered and water washed | 30 |
| 12 | Water added to give 20% suspension - mixing by ball mill for 2 hours at room temp. ($\approx$ 18ºC) | 93 |

## Claims

1. A process for the production of an organophilic clay gellant containing one or more onium compounds in a quantity in excess of that corresponding to the cation exchange capacity of the clay by treating a swelling clay with the said quantity of an onium compound in the presence of a liquid comprising a polar organic solvent characterised in that any quantity of water which is present is not more than that which would be provided in total by a content of water in the clay of up to 15% by weight and in the onium compound of less than 10% by weight and in the organic solvent of no more than 20% by weight, and in that the quantity of the polar organic solvent is such that a non-flowable paste or a particulate solid mass results from the mixing and in that the paste or solid particulate mass is subjected to sufficient shear mixing to raise the temperature of the non-flowable paste or solid mass, the temperature of mixing being above 50ºC but below the boiling point of the polar organic solvent.

2. A process as claimed in claim 1 wherein the quantity of onium compound is at least 130% of that corresponding to the cation exchange capacity of the clay.

3. A process as claimed in claim 1 or 2 wherein the quantity of onium compound is not more than 180% of that corresponding to the cation exchange capacity.

4. A process as claimed in any preceding claim wherein the quantity of the polar organic solvent is selected from the range 10% to less than 30% by weight of the onium compound.

5. A process as claimed in any preceding claim wherein the clay is mixed with a solution of the onium compound in the polar organic solvent.

6. A process as claimed in any preceding claim wherein the mixture is subjected to shear for at least 30 minutes.

7. A process as claimed in any preceding claim wherein the mixture is subjected to shear at a temperature of above 70ºC.

8. A process as claimed in any preceding claim wherein the swelling clay is a smectite.

9. A process as claimed in any preceding claim wherein the onium compound is an ammonium compound containing at least one saturated carbon chain containing from 10 to 30 carbon atoms.

10. A process as claimed in claim 9 wherein the said chain is a hydrogenated tallow residue.

## Patentansprüche

1. Ein Verfahren zur Herstellung eines organophilen Tongeliermittels, enthaltend eine oder mehrere Oniumverbindungen in einer Überschußmenge in bezug auf die der Kationenaustauschkapazität des Tones entsprechenden Menge, durch Behandeln eines Quell- tones mit der genannten Menge einer Oniumverbindung in Gegenwart einer Flüssigkeit, umfassend ein polares organisches Lösungsmittel, dadurch gekennzeichnet, daß jegliche vorhandene Wassermenge die Gesamtmenge, die durch den Wassergehalt in dem Ton von bis zu 15 Gewichtsprozent, den Wassergehalt in der Oniumverbindung von weniger als 10 Gewichtsprozent und den Wassergehalt in dem organischen Lösungsmittel von nicht mehr als 20 Gewichtsprozent gebildet würde, nicht übersteigt und daß die Menge an polarem organischem Lösungsmittel so gewählt ist, daß eine nicht fließfähige Paste oder eine teilchenförmige feste Masse aus dem Mischvorgang resultiert und daß die Paste oder die feste teilchenförmige Masse einem ausreichenden Schermischvorgang unterworfen wird, so daß die Temperatur der nicht fließfähigen Paste oder der festen Masse ansteigt, wobei die Mischtemperatur mehr als 50°C beträgt, aber unter dem Siedepunkt des polaren organischen Lösungsmittels liegt.

2. Ein Verfahren wie in Anspruch 1 beansprucht, in welchem die Menge der Oniumverbindung mindestens 130% der der Kationenaustauschkapazität des Tones entsprechenden Menge beträgt.

3. Ein Verfahren wie in Anspruch 1 oder 2 beansprucht, in welchem die Menge der Oniumverbindung nicht mehr als 180% der der Kationenaustauschkapazität des Tones entsprechenden Menge beträgt.

4. Ein Verfahren wie in einem der vorstehenden Ansprüche beansprucht, in welchem die Menge des polaren organischen Lösungsmittels ausgewählt ist aus dem Bereich von 10 bis weniger als 30 Gewichtsprozent der Oniumverbindung.

5. Ein Verfahren wie in einem der vorstehenden Ansprüche beansprucht, in welchem der Ton mit einer Lösung der Oniumverbindung in dem polaren organischen Lösungsmittel vermischt wird.

6. Ein Verfahren wie in einem der vorstehenden Ansprüche beansprucht, in welchem die Mischung mindestens 30 Minuten lang einem Schervorgang unterworfen wird.

7. Ein Verfahren wie in einem der vorstehenden Ansprüche beansprucht, in welchem die Mischung bei einer Temperatur von mehr als 70°C einem Schervorgang unterworfen wird.

8. Ein Verfahren wie in einem der vorstehenden Ansprüche beansprucht, in welchem der Quellton ein Smektit ist.

9. Ein Verfahren wie in einem der vorstehenden Ansprüche beansprucht, in welchem die Oniumverbindung eine Ammoniumverbindung, enthaltend mindestens eine gesättigte Kohlenstoffkette mit 10 bis 30 Kohlenstoffatomen, ist.

10. Ein Verfahren wie in Anspruch 9 beansprucht, in welchem die genannte Kette ein hydrierter Talgrückstand ist.

**Revendications**

1. Procédé de production d'un gélifiant argileux organophile contenant un ou plusieurs composés onium en une quantité en excès par rapport à celle correspondant à la capacité d'échange de cations de l'argile, selon lequel on traite une argile gonflante avec ladite quantité d'un composé onium, en présence d'un liquide comprenant un solvant organique polaire, caractérisé en ce que la quantité d'eau présente n'est pas supérieure à celle qui serait obtenue en totalité avec une teneur en eau dans l'argile allant jusqu'à 15% en poids, dans le composé onium de moins de 10% en poids et dans le solvant organique de pas plus de 20% en poids, en ce que la quantité du solvant organique polaire est telle que l'on obtient une pâte ne s'écoulant pas ou une masse particulaire solide, en mélangeant, et en ce que la pâte ou la masse particulaire solide est soumise à un mélange suffisant avec cisaillement pour élever la température de la pâte ne s'écoulant pas ou de la masse solide, la température de mélange étant supérieure à 50°C, mais inférieure au point d'ébullition du solvant organique polaire.

2. Procédé selon la revendication 1, dans lequel la quantité de composé onium est d'au moins 130% de celle correspondant à la capacité d'échange de cations de l'argile.

6

3. Procédé selon la revendication 1 ou 2, dans lequel la quantité de composé onium n'est pas supérieure à 180% de celle correspondant à la capacité d'échange de cations.

4. Procédé selon l'une quelconque des revendications précédentes, dans lequel les quantités du solvant organique polaire est de 10% à moins de 30% en poids du composé onium.

5. Procédé selon l'une quelconque des revendications précédentes, dans lequel l'argile est mélangée avec une solution du composé onium dans le solvant organique polaire.

6. Procédé selon l'une quelconque des revendications précédentes, dans lequel le mélange est soumis à un cisaillement pendant au moins 30 minutes.

7. Procédé selon l'une quelconque des revendications précédentes, dans lequel le mélange est soumis à un cisaillement à une température supérieure à 70°C.

8. Procédé selon l'une quelconque des revendications précédentes, dans lequel l'argile gonflante est une smectite.

9. Procédé selon l'une quelconque des revendications précédentes, dans lequel le composé onium est un ammonium contenant au moins une chaîne carbonée saturée de 10 à 30 atomes de carbones.

10. Procédé selon la revendication 9, dans lequel ladite chaîne est un groupe suif hydrogéné.